# EUROPEAN PATENT APPLICATION

(11) **EP 1 895 453 A1**
(43) Date of publication of application: **05.03.2008**
(21) Application number: 06018270.6
(22) Date of filing: 31.08.2006
(51) Int. Cl.: G06Q 10/00

(54) **Method and apparatus for performing a business process of a service provider**

(71) Applicant: SIEMENS AKTIENGESELLSCHAFT, 80333 München (DE)
(72) Inventor: Berbner, Rainer, 64283 Darmstadt (DE); Grimminger, Jochen, 80636 München (DE); Zaid, Farid c/o M. Andreeva, 81539 München (DE)

(57) **Abstract**

A method and apparatus for performing a business process (BP) of a service provider (SP), wherein the method upon execution of an actual task (tᵢ) of said business process (BP), the following steps are performed: calculating an optimal execution plan of webservices (WS) to be invoked by remaining tasks of said business process (BP) depending on a performance deviation (ΔP) between an actual performance of a webservice invoked by a preceding task (tᵢ₋₁) of said business process (BP) and an expected performance of the webservice invoked by the preceding task (tᵢ-₁) of said business process (BP) is contracted in a service level agreement (SLA), and invoking a webservice (WS) by the actual task (tᵢ) according to the calculated optimal execution plan from a webservice provider (WSP) .

## Description

### BACKGROUND OF THE INVENTION

The invention relates to a method and an apparatus for performing a business process of a service provider wherein an optimal execution plan of webservices is calculated.

Webservices are designed to automate e-business on a data network, such as the Internet. A webservice is a service available via the Internet that conducts transactions. Distributed computer systems enhance information sharing, mobile communication and e-business. Distributed computer systems can be used to perform financial transactions, automate purchase order or to automate multimedia content delivery.

Webservices are designed to enable easy platforms and system-independent machines to machine communications. In a service-oriented architecture (SOA) applications make use of services available in a network, such as the world wide web. Service-oriented architecture is a way of sharing functions, typically business functions, in a wide-spread and flexible way.

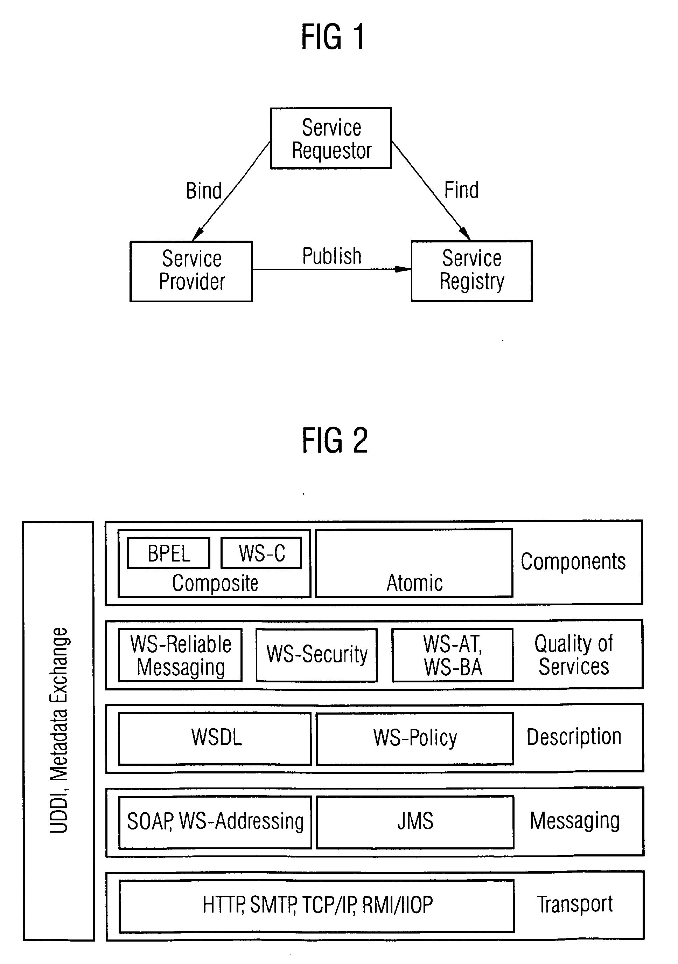

Figure 1 is a diagram for illustrating the basic principle of a service-oriented architecture (SOA) according to the state of the art. A service provider offers a service including details to allow any user who intends to use the service to bind to it in an appropriate way. The service provider publishes the detailed information about the service functionalities and how the service can be accessed in order to make it available to a potential service user. This is information is, for instance, represented in a form of meta data and published to a directory or a registry.

A service registry works like a service broker. The service registry offers the interfaces to an available service provider to publish the service description information along with additional business data. On the other hand, the service registry offers discovery facilities and appropriate interfaces such that a service requestor can find services that he is interested in and to select these services. The directory can be a universal description and discovery integration directory (UDDI).

A service requestor who wishes to discover and use a service offered by a service provider finds the appropriate service by surfing through the service registry. Based on the access information published about the service, the service requestor can bind to the selected service. The main advantages of a service-oriented architecture (SOA) are usability, interoperability, scalability, flexibility and cost efficiency. Developers can take code developed for existing business applications, expose it as webservices and then reuse it to meet new business requirements. Further, a service-oriented architecture SOA allows operability, i. e. clients of services can communicate and understand each other no matter what platform they run on. Because services in a service-oriented architecture are loosely coupled, an application that uses said services can be scaled easily and is more flexible. A webservice based on service-oriented architecture results in less costly solutions because the integration of client services do not require in-depth analysis and an unique code to customize solutions.

A webservice is a software system designed to support interoperable machine-to-machine interaction over a network. A webservice has an interface described in a machine processable format, such as the webservice description language (WSDL). Other systems interact with the webservice in a manner predescribed as description using simple object protocol (SOAP) messages typically using HTTP and XML in conjunction with other web related standards.

Figure 2 illustrates a webservice stack including the current standards and emerging standards for webservices.

The bottom layer of the webservice stack presents various transport protocols supporting the communication between a service and a requestor. A messaging layer on top of the transport layer provides the capabilities to handle messages of different types, wherein SOAP and WS addressing present the support of XML based messaging and JMS presents non-XML messaging. A description layer on top of the messaging layer uses WDSL to support and deal with functional service description and binding mechanisms. The WS policy of the description layer describes a quality-of-service function. The quality of service delivered and supported by the webservice architecture itself resides in the next layer, i. e. in the quality-of-service layer. This layer deals with security aspects, such as integrity and confidentiality of messages. The quality-of-service layer provides a WS reliable messaging with a reliable transport of messages and supports various kinds of transactions. In order to support coordination (orchestration) of services for a business process composed from several services, the webservice architecture as shown in figure 2 uses a component layer residing on top of the webservice stack. One of the standards widely accepted nowadays is BPEL (Business Process Execution Language). The webservice stack includes a further layer which provides discovery of the services and the description for a service requestor.

XML (Extendable Mark-up Language) provides the common syntax for webservices and defines a universal format for the representation and transmission of structure data in a manner that is independent of any particular hardware, software, file system, calculating or programming language. XML is defined using an unicode that allows to represent a content from many languages. The main functions of XML are interapplication communication, data integration and external application communication with outside partners.

For webservice messaging, the simple object access protocol SOAP is used with an XML based protocol representing the fundamental messaging framework for webservices. With SOAP, it is possible to exchange structured and typed information between webservices in a distributed environment. A SOAP message consists of an SOAP envelope which contains an mandatory SOAP body and optionally further SOAP headers.

Service level agreements SLA are signed between two parties for satisfying clients, managing expectations, regulating resources and controlling costs. The SLA management involves the procedure of signing service level agreements, thus creating binding contracts, monitoring their compliance and taking control actions.

In conventional methods for performing a business process of a service provider, the business process comprises several tasks which are executed one after the other during its execution. During the execution of one task of the business process, a webservice is invoked by the task from different service partners each having a service level agreement SLA with the service provider SP performing the business process BP. Typically, for each task there are different webservice providers WSP providing the service with different prices and with different characteristics, such as execution time of the invoked webservice. The characteristics laid down in the different service level agreements between the service provider SP and the different webservice providers WSP are fixed during the execution of the business process BP by a service provider SP, wherein the actual performance of the invoked webservice is not compared with the performance as laid down in the service level agreement SLA.

Since there is no flexibility in executing and performing the business process of a service provider SP, the characteristics of the complete business process BP cannot be optimized during one time of the business process BP.

The conventional methods for performing a business process according to the state of the art cannot react to a performance deviation between an actual performance of a webservice invoked by a task of the business process BP and an expected set performance of the webservice as contracted in a service level agreement SLA with the respective webservice provider WSP.

### BRIEF SUMMARY OF THE INVENTION

It is an object of the present invention to provide a method and an apparatus for performing a business process of a service provider SP which can react to a performance deviation of an actual performance of a webservice invoked by a task of the business process and an expected performance of the invoked webservice, thus allowing optimizing an execution flow of the business process.

The invention provides a method for performing a business process BP of a service provider SP,
wherein the method upon execution of an actual task of the business process comprises the steps of
- calculating an optimal execution plan of webservices WS to be invoked by remaining tasks of said business process BP depending on a performance deviation between an actual performance of a webservice invoked by a preceding task of said business process BP and an expected performance of the webservice WS invoked by the preceding task of said business process as contracted in a service level agreement SLA; and
- invoking a webservice WS by the actual task according to the calculated optimal execution plan from a webservice provider WSP.

In a preferred embodiment of the method according to the present invention, the business process is performed by a BPEL (Business Process Execution Language) engine.

In one embodiment of the method according to the present invention, the actual performance of the invoked webservice is monitored by the BPEL engine and compared with the expected performance of the invoked webservice to determine the performance deviation.

In one embodiment of the method according to the present invention, a performance of the invoked webservice comprises an execution time, an availability and a throughput provided by the webservice provider WSP.

In one embodiment of the method according to the present invention, the BPEL engine starts a business process in response to a start message from the service provider SP.

In one embodiment of the method according to the present invention, the service provider SP transmits the start message to the BPEL engine in response to a service request from a client.

In one embodiment of the method according to the present invention, a service level agreement SLA is settled between the client and the service provider SP.

In one embodiment of the method according to the present invention, further service level agreements SLA are contracted between the service provider SP and webservice providers WSP providing the webservices for the service requested by said client.

In one embodiment of the method according to the present invention, the optimal execution plan is calculated by means of a simplex algorithm.

In one embodiment of the method according to the present invention, the optimal execution plan comprises for each remaining task of said business process BP a webservice provider WSP from which a corresponding webservice can be invoked by the respective task such that the total costs of all invoked webservices are minimal and all constraints contracted in the service level agreements SLAs are fulfilled.

The invention further provides an apparatus for performing a business process BP of a service provider SP,
wherein the apparatus upon execution of each task t of the business process BP calculates an optimal execution plan of webservices WS to be invoked by remaining tasks of said business process BP depending on a performance deviation ΔP between an actual performance of a webservice WS invoked by a preceding task of said business process BP and an expected performance of the webservice WS invoked by the preceding task of said business process as contracted in a service level agreement SLA and invokes a webservice WS by the actual task according to the calculated optimal execution plan from a webservice provider WSP.

In a preferred embodiment of the apparatus according to the present invention, the apparatus is formed by a BPEL (Business Process Execution Language) engine.

### BRIEF DESCRIPTION OF THE DRAWINGS

The invention will be described in greater detail herein after, by way of non-limiting examples, with reference to the embodiments shown in the drawings.
Figure 1 shows a diagram for illustrating a service oriented architecture according to the state of the art;
Figure 2 shows a webservice protocol stack according to the state of the art;
Figure 3 shows a system as a platform for the method for performing a business process of a service provider according to the present invention;
Figure 4 shows a signal diagram for illustrating an embodiment of the method for performing a business process according to the present invention;
Figure 5 shows a flowchart of a possible embodiment of the method for performing a business process of a service provider according to the present invention;
Figure 6 shows a further signal diagram for illustrating an embodiment of the method for performing a business process of a service provider according to the present invention.

### DETAILED DESCRIPTION OF THE FIGURES

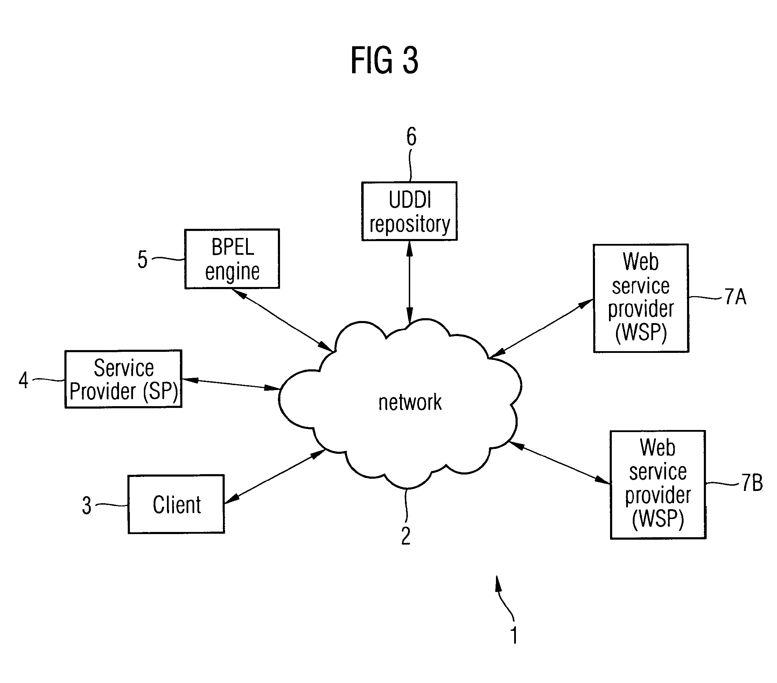

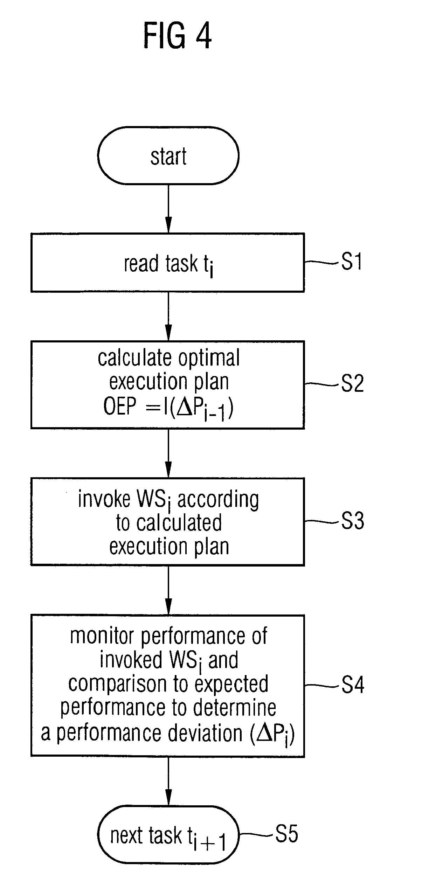

Figure 3 shows a computer system 1 comprising a data network 2, such as the network for implementing the method for performing a business process BP of a service provider SP according to the present invention. The network 2 comprises at least one client 3 which might request a service from a service provider 4. Furthermore, a BPEL engine 5 for running a business process and an UDDI repository 6 are connected to the network 3. As can be seen in figure 3, different webservice providers 7a, 7b for providing the same webservice WS are also connected to the network 2. The client 3 has a service level agreement SLA with the service provider 4 for the desired service. To fulfil this obligation, the service provider 4 has himself service level agreements SLA with different webservice providers, such as webservice providers 7a, 7b providing webservices WS which can be invoked for fulfilling tasks t executed during the business process BP. When the client 3 requests the service from the service provider 4, the service provider 4 initiates an automatic business process BP on the BPEL engine 5 with a start message as shown in figure 4. The BPEL engine invokes then for each task t a corresponding webservice WS from a webservice provider 7. The business process BP consists of a sequence of tasks to be executed. For each task t, a BPEL engine 5 looks up a webservice provider 7 offering a corresponding webservice WS by performing a discovery in the UDDI repository 6 to receive an address of the webservice provider 7, e. g. an URL as shown in figure 4. The BPEL engine 5 compares after invocation of the webservice the actual performance of the invoked webservice WS with the expected performance for said webservice as laid down in the service level agreement SLA between the service provider 4 and the respective webservice provider 7.

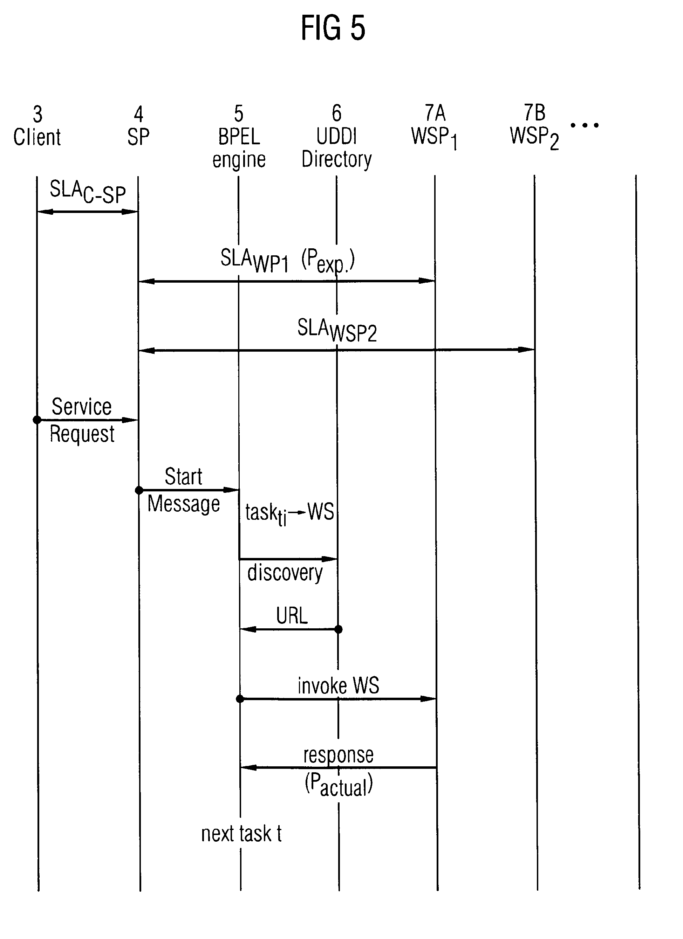

Figure 5 shows a flowchart of a possible embodiment of the method according to the present invention for performing a business process BP.

In a step S1, the BPEL engine 5 reads the actual task tᵢ of the business process BP.

In a further step S2, the BPEL engine 5 calculates an optimal execution plan of webservices WS to be invoked by remaining tasks of said business process BP depending on a performance deviation ΔP between an actual performance of a webservice WS invoked by a preceding task tᵢ₋₁ of the business process BP and an expected performance of the webservice invoked by the preceding task tᵢ₋₁ of the business process BP as contracted in a service level agreement SLA between the service provider 4 and the respective webservice provider 7.

In a further step S3, the BPEL engine 5 invokes a webservice WSᵢ for the actual task tᵢ according to the calculated optimal execution plan from the webservice provider 7. Then, in a step S4, the performance of the invoked webservice WSᵢ of the actual task tᵢ is again monitored and compared to the expected performance to determine the performance deviation ΔPᵢ.

The process proceeds to the next task tᵢ₊₁ in step S5 until the business process BP is completed.

Table A shows an example of a business process BP comprising three tasks t₁, t₂, t₃ wherein for the webservice of task t₁ two different webservice providers 7-1-1; 7-1-2 are connected to the network 2. For the next task t₂, there is only one webservice provider 7, and for the third task t₃ of the business process, there are three different webservice providers 7-3-1, 7-3-2, 7-3-3.

It has to be understood that the group of webservice providers 7 change for each task tᵢ.

**Table A:**

| | | | |
|---|---|---|---|
| t₁ | WS₁₁ | WS₁₂ | |
| t₂ | WS₂₁ | | |
| t₃ | WS₃₁ | WS₃₂ | WS₃₃ |

Table B shows a possible execution plans EP for the simple example as shown in table A:

| | |
|---|---|
| Execution plans: | EP₁ = {(t₁, WS₁₁) ; (t₂, WS₂₁) ; (t₃, WS₃₁)} |
| | EP₂ = {(t₁, WS₁₁) ; (t₂, WS₂₁) ; (t₃, WS₃₂)} |
| | EP₃ = {(t₁, WS₁₁) ; (t₂, WS₂₁) ; (t₃, WS₃₃)} |
| | EP₄ = {(t₁, WS₁₂) _{;} (t₂, WS₂₁) ; (t₃, WS₃₁)} |
| | EP₅ = {(t₁, WS₁₂) ; (t₂, WS₂₁) ; (t₃, WS₃₂)} |
| | EP₆ = {(t₁, WS₁₂) ;(t₂, WS₂₁) ; (t₃, WS₃₃)} |

A first possible execution plan EP₁ for executing the business process BP comprising tasks t₁, t₂, t₃ includes the invocation of the first webservice from the first webservice provider (WS₁₁), the invocation of the second webservice from the only possible webservice provide (WS₂₁) and the invocation of the third webservice for the third task t₃ from the webservice provider (WS₃₁). An alternative execution plan is, for instance, the execution plan EP₆ and the webservice for the first task t₁ is invoked from the other webservice provider (WS₁₂), and the webservice for the third task t₃ is invoked from a third webservice provider (WS₃₃).

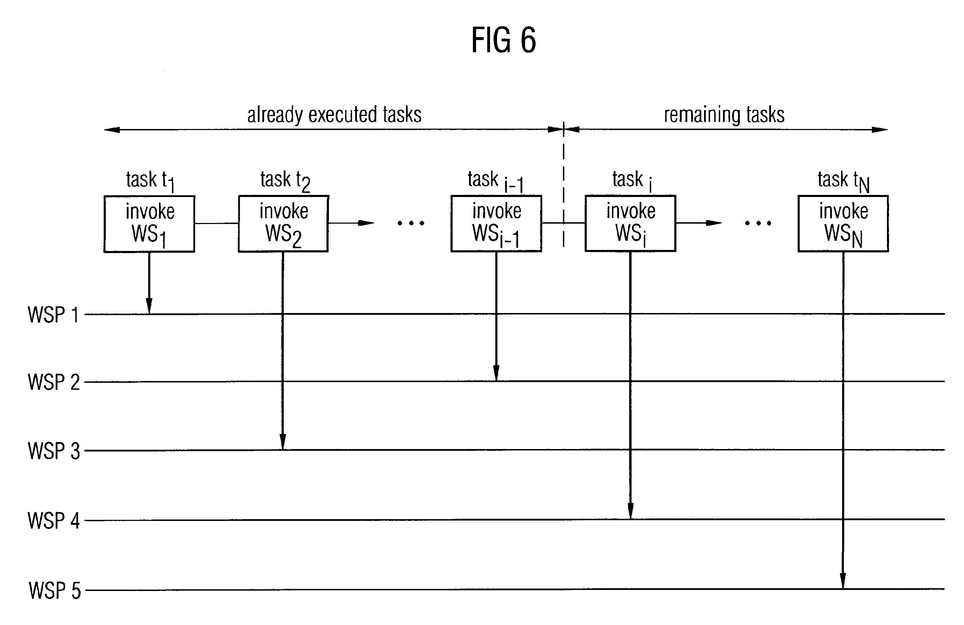

Figure 6 shows an example for the execution of a business process BP comprising N tasks, wherein for each task tᵢ a corresponding webservice WS is invoked. In the given example, the first webservice WS₁₁ for the task t₁ is invoked from a webservice provider WSP-A. The webservice invoked for the execution of task t₂ of the business process BP is performed by invoking a webservice WS from the webservice provider WSP-C. The webservice WSᵢ₋₁ for a task tᵢ₋₁ is, i. e. a preceding task of is the actual task tᵢ is performed by invoking a webservice WS from the webservice provider WSP-B. In the given example of figure 6, the webservice for the actual task tᵢ is invoked from a webservice provider WSP-D etc. The tasks t of the business process BP are separated in two groups, i. e. the already executed tasks t₁ to tᵢ₋₁, and the remaining tasks to be executed, i. e. task tᵢ to task tₙ which forms the last task of the business process BP.

Upon execution of the actual task tᵢ of the business process BP, an optimal execution plan of webservices to be invoked by the remaining tasks tᵢ-tₙ of said business process BP is calculated depending on a performance deviation ΔP between an actual performance ΔPᵢ₋₁ of a webservice invoked by a preceding task tᵢ₋₁ and an expected performance of the webservice WS invoked by the preceding task tᵢ of the business process BP as contracted in a service level agreement SLA between the respective webservice provider WSP 7 and the service provider 4. Then, the webservice WS as the actual task tᵢ is invoked according to the calculated optimal execution plan from the webservice provider 7.

In the given example of figure 6, the calculated optimal execution plan indicates that the actual task tᵢ should invoke the webservice from the webservice provider WSP-D. The webservice provider can change for each task tᵢ since each task t has to invoke different webservice providers WSP 7 providing different kinds of webservices WS. In the simple example of figure 6, the webservice providers WSPA-WSPE are the same webservice providers for all tasks. In a preferred embodiment of the method according to the present invention, the optimal execution plan is calculated by means of a simplex algorithm. The calculated optimal execution plan EP comprises for each remaining task of the business process BP a webservice provider 7 from which a corresponding webservice WS can be invoked by the respective task t such that the total costs for all invoked webservices are minimal and all constraints contracted in the respective service level agreements SLAs are fulfilled.

The present invention allows the invocation of webservices WS in a flexible manner to optimize the execution of the complete business process BP. For instance, if a webservice provider 7 provides the requested webservice WS faster than expected, it is possible for the BPEL engine 5 to invoke for the execution of the next task a webservice WS from a service provider 7 offering the corresponding webservice WS with a longer execution time, however, at lower costs. For instance, if the execution time of an actual invoked webservice WS is half the expected execution time of the invoked webservice, it is possible for the BPEL engine 5 to invoke the webservice WS for the next task from a webservice provider 7 offering this other webservice with a relative long execution time without expanding the run time or execution time of the whole business process BP. Contrary, if the performance P of an invoked webservice WS is worse than the expected performance, the BPEL engine 5 can compensate this by invoking a more expensive webservice WS for the next task offering a better performance.

Accordingly, the method according to the present invention allows on one side to safe costs for transactions and, on the other side, makes it possible to fulfil the performance of the complete business process BP, even when some webservice providers 7 supplying invoked webservices WS during the execution of the business process do not fulfil their respective service level agreement SLA with the service provider 4.

In the method according to the present invention, the selection of a webservice provider 7 is performed in a dynamic manner during the run time of the business process, thus allowing optimizing of the complete execution time of the business process BP and to save costs for the invocation of webservices WS from webservice providers 7.

## Claims

1. A method for performing a business process of a service provider,
wherein the method upon execution of an actual task of said business process comprises the following steps:
(a) calculating an optimal execution plan of webservices to be invoked by remaining tasks of said business process depending on a performance deviation between an actual performance of a webservice invoked by a preceding task of said business process and an expected performance of the webservice invoked by the preceding task of said business process as contracted in a service level agreement; and
(b) invoking a webservice by the actual task according to the calculated optimal execution plan from a webservice provider.

2. The method according to claim 1,
wherein the business process is performed by a BPEL (Business Process Execution Language) engine.

3. The method according to claim 2,
wherein the actual performance of the invoked webservice is monitored by the BPEL engine and compared with the expected performance of the invoked webservice to determine the performance deviation.

4. The method according to claim 1,
wherein a performance of the invoked webservice comprises an execution time, an availability and a throughput provided by the webservice provider.

5. The method according to claim 2,
wherein the BPEL engine starts a business process in response to a start message from the service provider.

6. The method according to claim 5,
wherein the service provider transmits the start message to the BPEL engine in response to a service request from a client.

7. The method according to claim 6,
wherein a service level agreement is contracted between the client and the service provider.

8. The method according to claim 7,
wherein further service level agreements are contracted between the service provider and webservice providers providing the webservices for the service requested by said client.

9. The method according to claim 1,
wherein the optimal execution plan is calculated by means of a simplex algorithm.

10. The method according to claim 10,
wherein the optimal execution plan comprises for each remaining task of said business process a webservice provider from which a corresponding webservice can be invoked by the respective task, such that the total cost of all invoked webservices is minimal and all constraints contracted in the service level agreements are fulfilled.

11. An apparatus for performing a business process of a service provider,
wherein the apparatus upon execution of each task of the business process calculates an optimal execution plan of webservices to be invoked by remaining tasks of said business process depending on a performance deviation between an actual performance of a webservice invoked by a preceding task of said business process and an expected performance of the webservice invoked by the preceding task of said business process contracted in a service level agreement and invokes a webservice by the actual task according to the calculated optimal execution plan from a webservice provider.

12. The apparatus according to claim 11,
wherein the apparatus is formed by a BPEL (Business Process Execution Language) engine.
